# EUROPEAN PATENT APPLICATION

(11) **EP 4 360 738 A1**
(43) Date of publication of application: **01.05.2024**
(21) Application number: 22203853.1
(22) Date of filing: 26.10.2022
(51) Int. Cl.: B01D 53/04, B01D 53/96, B01D 53/047

(54) **SYSTEM FOR SEPARATION OF CO2 FROM AIR USING AN ADSORBING MATERIAL IN AN ELECTROMAGNETIC INDUCTION PROCESS**

(71) Applicant: Airbus Defence and Space GmbH, 82024 Taufkirchen (DE)
(72) Inventor: MATTHIAS, Carsten, 82024 Taufkirchen (DE); HORN, Tobias, 82024 Taufkirchen (DE); DORST, Günther, 82024 Taufkirchen (DE); ELKIN, Bentsian, 82024 Taufkirchen (DE); SCHIESTEL, Thomas, 82024 Taufkirchen (DE)
(74) Representative: LKGLOBAL Lorenz & Kopf Patentanwalt Attorney at Law PartG mbB

(57) **Abstract**

An air cleaning device (100) for removing CO₂ from a gas and a vehicle having a life support system with such an air cleaning device (100) is provided. The air cleaning device (100) comprises an adsorber bed module (1), a controller (7), a generator of alternating magnetic field and a vacuum pump (9). The adsorber bed module (1) comprises a cavity (2), an inlet valve (3), an outlet valve (4), an adsorbing material (5) within the cavity (2), and an inductor coil (6) of the magnetic field generator. The adsorbing material (5) has magnetic properties. The controller (7) is configured to control the air cleaning device (100) in one of an adsorbing phase, an evacuating phase, and a regenerating phase. In the adsorbing phase a gas passing from the inlet valve (3) through the cavity and out of the outlet valve (4) penetrates the adsorbing material (5). Thereby, the adsorbing material (5) adsorbs CO₂ from the gas. In the evacuating phase, the cavity (2) is evacuated by the vacuum pump (9). In the regenerating phase, the inlet valve (3) and the outlet valve (4) are in a closed state and the controller (7) is configured to activate the magnetic field generator (6), thereby heating the adsorbing material (5) by induction heating and desorbing the CO₂ from the adsorbing material (5).

## Description

### TECHNICAL FIELD

The present disclosure relates to the removal of CO₂ from air in general and more specifically to an air cleaning device for removing CO₂ from environmental air utilizing magnetic induction heating for the regeneration of an adsorbing material. The disclosure further relates to vehicles, such as submarine vehicles or spacecrafts or hyperloop trains or other closed habitats, having a life support system utilizing such an air cleaning device.

### TECHNICAL BACKGROUND

In many applications, separation of CO₂ from environmental air is needed or desired. For example, in closed habitats such as in submarine vehicles, space stations or other space crafts, it is necessary to remove the CO₂ from the environmental air for purposes of life support. The separation of CO₂ thereby is the most important function of a Life Support System. Typical CO₂ concentrations in the cabin air are in a range of 0.2 to 0.5 Vol.-% (equal to 2000 to 5000 ppm). Another example is the separation of CO₂ from environmental air in so called Direct Air Capture (DAC) systems. This technology is becoming increasingly interesting to counteract the increasing CO₂ concentration (actual at approx. 400 ppm) in the atmosphere and to be able to gather CO₂ for P-t-G or P-t-L (Power-to-Gas, Power-to-Liquids) plants for the production of CO₂ neutral synthetic fuels. Further examples are the separation of CO₂ in combination with air conditioning systems to increase the overall system efficiency in, e.g., stationary application such as buildings or even in mobile applications such as air crafts.

For the above applications, low energy consumption of the CO₂ capture and release process is very important. In the state of art, solutions are known utilizing, e.g., steam regeneration of an adsorbing material. However, such solutions need complicated water management systems (incl. water tank, pump, sensors and controllers) and a steam generator. Further, such solutions for the separation of CO₂ from air consume approx. 2000 kWh of energy to produce one ton of CO₂, 25 % of which corresponds to the electrical energy demand and 75 % correspond to the thermal energy demand. Also, in particular for aviation and space applications, reduction of weight is important.

### DESCRIPTION

It is an objective to provide a lightweight air cleaning device with decreased overall energy demand.

This objective is solved by the subject matter of the independent claims. Further embodiments are described in the dependent claims as well as in the following description.

According to a first aspect, an air cleaning device for removing CO₂ from a gas is provided. The air cleaning device comprises an adsorber bed module, a controller, and a vacuum pump. The adsorber bed module comprises a cavity, an inlet valve, an outlet valve, an adsorbing material within the cavity, and a magnetic field generator, configured to generate an alternating magnetic field that acts on the cavity. The adsorbing material has magnetic properties. The controller is configured to control an opening state of the inlet valve and an opening state of the outlet valve as well as an activation state of the magnetic field generator and of the vacuum pump, such that the air cleaning device is selectively operated in one of an adsorbing phase, an evacuating phase, and a regenerating phase. In the adsorbing phase, the inlet valve is in an open state and the outlet valve is in an open state and the magnetic field generator is deactivated, such that the gas passing from the inlet valve through the cavity and out of the outlet valve penetrates the adsorbing material. Thereby, the adsorbing material adsorbs CO₂ from the gas. In the evacuating phase, the inlet valve is in a closed state and the outlet valve is in a closed state and the controller is configured to command the vacuum pump to evacuate the cavity. In the regenerating phase, the inlet valve is in a closed state and the outlet valve is in a closed state and the controller is configured to activate the magnetic field generator, thereby heating the adsorbing material by induction heating and desorbing the CO₂ from the adsorbing material.

The gas for which the air cleaning device is used may, for example, be ambient air (e.g., within a cabin of a closed habitat such as a spacecraft, submarine vehicle, hyperloop train etc.) or a technical gas or any other gas containing CO₂ that is to be separated from the gas. Further, it should be noted that the utilized separation mechanism is not limited to adsorption processes. Rather, any sorption process for separating the CO₂ from the gas may be utilized, such as also, for example, an absorption process. For absorption processes, for example, a porous magnetic material may be filled by capillary forces with an absorber (like MEA (Monoethanolamine) or IL (Ionic Liquids)). The term "adsorption" is to be understood in the above sense.

The adsorber bed module is the main functional unit of the air cleaning device. The cavity is a closed cavity that can be filled and emptied by means of the inlet valve and the outlet valve. Further, the cavity encloses the adsorbing material.

The adsorbing material may be any material that is capable of binding CO₂ molecules from air when coming into contact with the adsorbing material. Since the adsorbing material is arranged within the cavity, a gas that is blown (for example by means of a fan) into the inlet valve must pass the adsorbing material bevor exiting via the outlet valve. The adsorbing material may be arranged in an adsorber bed support structure. The complete adsorber bed support structure preferably is made of non-magnetic and electrically non-conducting materials, to avoid energy losses into the support structure and to guarantee that only energy input into the adsorbing material is realized.

The adsorbing material may, for example (as described further below with regard to one embodiment), comprise a functionalized solid amine material comprising a solid amine polymer material and a magnetic inorganic material (providing the adsorbing material with the magnetic properties). However, instead of amine materials, other functional groups could be used, too. For example, pyridines, imidazoles, guanidines, phosphazenes, etc. could be used instead of amines. However, this list is only exemplary. Any material having the desired properties may be used.

In this way, during the adsorbing phase, CO₂ molecules present in the feed air entering via the inlet valve is adsorbed by the adsorbing material. Therefore, air exiting via the outlet valve is free from (most of) the bound CO₂. During the adsorption phase, due to the chemical interaction of the CO₂ molecules with, e.g., functional amino groups or other basic functional groups of the adsorbing material, the CO₂ is removed from the environmental air and bound by the adsorbing material. The feed gas may, e.g., be environmental air with a CO₂ concentration in the range of, e.g., 400 ppm to 5000 ppm. The feed gas may optionally undergo a pre-drying procedure by means of a condensing heat exchanger (CHX) in the feed line prior to the inlet valve. The exhaust gas (air exiting via the outlet valve) is "cleaned" air with a residual very low CO₂ concentration. However, once the adsorbing material is saturated, it can no longer bind additional CO₂ molecules and needs to be regenerated (freed from the adsorbed CO₂). As soon as the target CO₂ loading capacity is reached on the material, then the adsorption step is finished and the evacuating phase and afterwards the regenerating phase is started.

Before regenerating the adsorbing material, the (at least partially) "clean" air still present within the cavity after the inlet valve and the outlet valve have been closed needs to be removed from the cavity. Therefore, in the evacuating phase, this clean air is evacuated by the vacuum pump, e.g., via a vacuum pump valve. The vacuum pump output terminal may, for example, be connected to a three-way valve, so that the clean air from the evacuating phase and the CO₂ gas from the recovery phase may be directed in different ways. This air recovery process (evacuating phase) is especially needed in Life Support Systems for aviation/space or submarine applications, to limit the air loss during a mission. But the residual air removed from the adsorber beds before the regenerating phase may be used in P-t-X (Power-to-Gas or Power-to-Liquid) plants because a CO2 gas with high purity and minimized air impurities may then be produced afterwards in the regenerating phase.

During the regenerating phase, the CO₂ molecules adsorbed by the adsorbing material are removed. To that end, the adsorbing material needs to be heated to a desorbing temperature. The desorbed CO₂ may then be removed from the cavity, e.g., by the vacuum pump. For this, the three-way valve described above may, for example, be set to another position, so as to direct the CO₂, e.g., into a gas tank or feed it to another system for further processing.

For example, the CO₂ recovered in that way may be used in P-t-X systems to produce synthetic fuels. If the air cleaning device is used as part of a Life Support System, e.g., in submarine or aviation/space applications, the CO₂ gas may also be directed to the outside. Further, the air cleaning device may be used to recover CO₂ from the atmosphere.

Optionally, to remove residual humidity from the CO₂ gas flow and to protect other devices or systems, such as the vacuum pump or a further processing system downstream, against condensate formation a further CHX may be integrated behind the adsorber bed module in the CO₂ gas section. In this CO₂ gas section, further units, such as, for example, a CO₂ compressor, may be installed depending on the application.

Heating of the adsorbing material occurs by magnetic induction heating via the magnetic field generator, which may, for example, as described further below with regard to an embodiment, comprise a generator of alternating electrical current (high-frequency generator, HF generator) and electrical coil(s) that surround the cavity and with it the adsorbing material and that generates an alternating high frequency magnetic field within the cavity and therefore within the adsorbing material. The adsorbing material has magnetic properties (as described further below) such that it can be heated by alternating magnetic fields. This will result in heating the adsorbing material (because of its magnetic properties, e.g., provided by a magnetic inorganic material incorporated within the adsorbing material, as described further below) by energy absorption from the alternating magnetic field. With increasing temperature, the CO₂ gas is desorbed from the adsorbing material in a PTSA (Pressure Temperature Swing Adsorption) process. This is assisted by the vacuum pump that stays enabled and permanently removes the desorbing CO₂ gas from the cavity of the adsorber bed module. By switching the three-way valve (described above) during the heating phase into the direction of, for example, a CO₂ gas re-processing system, subsequently a constant CO₂ gas flow may, e.g., be routed to a P-t-X plant. Alternatively, the produced CO₂ gas can also be stored in a tank or other CO₂ storage capacities or can be routed to a CO₂ compressor for overboard venting of the CO₂ in, e.g., submarine or aviation/space applications. The CO₂ gas quality may further optionally be monitored during the regenerating phase with CO₂ gas sensors. Further, the CO₂ gas flow rate may optionally be controlled with a CO₂ (mass) flow meter and a pressure sensor, and the applied electrical power to the magnetic field generator (i.e., from the HF generator to the electrical coil(s) in corresponding embodiments) and/or the vacuum pump speed may be adjusted in such a way as to keep the optimal CO₂ gas flow.

Additionally, as the temperature dependence of the magnetic properties of the used magnetic material is known, the electrical response of the system, e.g. the impedance or harmonics generation, may optionally be monitored and used to derive information about the temperature within the adsorber bed module and to correspondingly control the applied power.

The controller may be any device capable for controlling opening states of the valves and operating states of the magnetic field generator and the vacuum pump, such as a general-purpose computer having a CPU and memory components, an FPGA device, an ASIC or any other suitable device.

The adsorber bed module may be periodically operated, by the controller, in the adsorbing phase, the evacuating phase and the regenerating phase. As soon as the regenerating phase is completed (which could, for example, be determined by the CO₂ flow rate starting to drop below a minimum gas flow rate), the next adsorption phase is starting and the process continues with the next operational cycle.

Further, advantageously, a second adsorber bed module is present that is identical to the first adsorber bed module and that is connected in parallel to the first adsorber bed module. In other words, in such configurations, the inlet valve of a first adsorber bed module and the inlet valve of the second adsorber bed module are connected to the same feed line and the outlet valves of the first and second adsorber bed modules are connected to the same exhaust line. The second adsorber bed module may then be operated inversely to the first adsorber bed module, so that when the first adsorber bed module is in the adsorbing phase, the second adsorber bed module is in the regenerating phase and vice versa. Further, therefore heat transfer between the two adsorber bed modules is possible because the adsorber bed modules operate inversely to each other. A single vacuum pump or multiple vacuum pumps may be used for both adsorber bed modules. The same applies to the HF generator(s) in corresponding embodiments. In this way, at any time one of the adsorber bed modules is "cleaning" air while the other one is regenerated, providing constant output of "clean" air and CO₂. Also, any other number of adsorber bed modules greater than two that are connected in parallel in the described manner may be used and controlled appropriately.

The disclosed system decreases the energy demand of the overall process. The electrical consumption is reduced with an optimized ion-exchange resin adsorber bed design in the shape of, e.g., a cylindrical ring. The air may, e.g., be blown radially through the adsorber bed, thus minimizing the pressure drop, which is especially needed for DAC systems because here the air flow rate is very high due to the low CO₂ concentrations in the feed air. The thermal energy demand is significantly reduced due to an electrical regeneration process, using so called electromagnetic induction heating. Thereby, the heating is realized by a high frequency magnetic field in a PTSA process (Pressure Temperature Swing Process).

According to an embodiment, the adsorbing material is a functionalized solid amine material.

According to another embodiment, the functionalized solid amine material comprises a solid amine polymer material and a magnetic inorganic material. The solid amine polymer material and the magnetic inorganic material are one of: each in particle form, wherein the solid amine polymer material particles and the magnetic inorganic material particles are loosely mixed together; each in particle form, wherein the magnetic inorganic material particles are incorporated as smaller particles within the solid amine polymer material particles; or the magnetic inorganic material builds a particle core that is coated with the solid amine polymer material.

Solid amine materials (such as functionalized solid amine resins) may be used for the capture of CO₂ because these materials have highest CO₂ loading capacities even at very low CO₂ concentrations and at the same time a very high selectivity due to chemical interactions of the CO₂ molecules with functional amino groups. Functionalized solid amine resins combining polymer solid amine materials with magnetic inorganic materials are used to be able to regenerate the originally based polymer material by heating via a high frequency magnetic field via induction heating. Thereby, the magnetic inorganic material is heated during the regenerating phase by the magnetic field, which in turn heats the solid amine polymer material. In other words, the magnetic inorganic material provides the adsorbing material with the necessary magnetic properties, as described further above, to inductively heat the adsorbing material. When reaching a desorbing temperature, the CO₂ molecules bound to the functional amino groups are released and the adsorbing material may afterwards, in a next cycle, be used again in the adsorbing phase.

The solid amine polymer material and the magnetic inorganic material may both be manufactured as individual particles that are loosely mixed together, like two powder materials that are mixed together. The material mixture may further undergo an additional mechanical compacting by applying a mechanical force with the aim to prevent de-mixing and to improve the thermal contact between the magnetic inorganic material and the solid amine polymer material. By this process, a mold is formed. To minimize pressure drop, the mold can contain open channels (such as honeycomb structures).

In order to avoid de-mixing of the solid amine polymer material and the magnetic inorganic material, the magnetic inorganic material may also be built as smaller particles than the particles of the solid amine polymer material. Multiple of such smaller particles may be incorporated into each of the solid amine material particles. In this way, induction heating of the magnetic inorganic material particles directly heats up the solid amine material particles from the inside. Because the magnetic inorganic material particles are incorporated into the solid amine material particles, both particle types are always in direct contact with each other, thereby improving heat transfer. By way of a non-limiting example, the size of the magnetic inorganic material particles to be incorporated into a solid amine material particle preferably is in the range from a few hundred nm to some ten µm. The most preferable size is from 2 to 10 µm.

The single magnetic inorganic material particles may also build single core particles of each solid amine material particle. In other words, each solid amine material particle may have its own core made from the magnetic inorganic material. In particular, the solid amine material may be coated onto the core made from the magnetic inorganic material.

Further, any combination of the forms described above may be utilized for the adsorbing material.

The magnetic inorganic material particles to be distributed within a solid amine material may further be porous with the aim to improve gas transport through the adsorbing material.

According to another embodiment, the magnetic inorganic material comprises at least one of: a metallic alloy based on at least one metal from the group consisting of iron or nickel or cobalt or a combination thereof; a chemical compound based on chromium dioxide; a chemical compound based on iron oxides. Other chemical compounds comprising metal ions and compositions of the aforementioned compounds are conceivable, too.

The most preferable magnetic inorganic material is a ferrite, i.e., one of a group of ferrimagnetic ceramic compounds derived from iron oxides and usually doped by elements from the following group: Nickel, Cobalt, Manganese, Copper, Zinc, Strontium, and Barium.

According to another embodiment, a surface of the magnetic inorganic material particles is functionalized with chemical functional groups to improve wetting by and adhesion to the solid amine polymer material.

The surface chemical functionality may provide electrostatic coupling to amines due to negative electrical charge and/or covalent coupling. This further avoids de-mixing of the magnetic inorganic material from the solid amine polymer material.

According to another embodiment, the surface chemical functional groups comprise at least one of carboxyl, epoxide, isocyanate, mercaptan, and isothiocyanate.

Further, a silane is preferably used as a coupling agent.

According to another embodiment, the solid amine polymer material and/or the magnetic inorganic material is coated with a solid adhesive material, thereby improving stability against de-mixing and thermal contact.

This may be achieved by prior coating of magnetic inorganic material particles and/or solid amine polymer material particles with a solid adhesive material and thermally activating said adhesive during or after mechanical compacting.

According to another embodiment, the adsorbing material is arranged in a cylindrical or polygon shaped bed within the cavity, such that air entering the cavity penetrates the cylindrical or polygon shaped bed, containing the adsorbing material, in a radial direction.

In particular, the cylindrical or polygon shaped bed is arranged within the cavity such that the symmetry axis of the bed is perpendicular to the radial direction of the cavity. By arranging the adsorbing material in this way and by letting the air penetrating the bed in the radial direction, the distance, the air has to travel through the bed is kept small, thereby keeping the pressure drop low.

According to another embodiment, the cylindrical or polygon shaped bed comprises an integrated honeycomb structure.

For example, multiple flat (unbent) structures having an internal honeycomb-like structure may be added together, so that the flat structures build a circumferentially closed polygon shaped structure. However, it is also conceivable that the honeycomb-like structure is incorporated into a cylindrically closed (round) structure. By including a honeycomb structure within the cylindrical or polygon shaped bed, which is filled with the adsorbing material, the honeycombs build a superordinate macrostructure. Each of the honeycombs is filled with the adsorbing material. In particular, if the adsorbing material is a mixture of solid amine material particles and magnetic inorganic material particles, these particles may segregate, e.g., due to vibrations. The macrostructure built by the honeycombs only allows for the particles within a single honeycomb cell to segregate. However, complete and large-scale segregation of the particles can be avoided.

According to another embodiment, the magnetic properties of the adsorbing material comprise a Curie temperature that is higher than the necessary temperature for desorbing adsorbed CO₂ from the adsorbing material and lower than a temperature that has negative effects on the adsorbing material, such that the adsorbing material loses its magnetic properties when the Curie temperature is reached. This provides a self-regulated induction heating preventing overheating of the adsorbing material.

Together with losing its magnetic properties, the adsorbing material loses its ability to absorb energy from the magnetic field, and therefore, further heating is automatically stopped. The Curie temperature may, by way of a non-limiting example, be in the range of approximately 105 °C. The self-regulation allows for a very homogeneous temperature distribution over the entire adsorbing material and hinders the input of excess energy into the adsorbing material. This further makes the overall process more energy efficient.

According to another embodiment, the adsorber bed is enclosed by a magnetic shielding having a high magnetic permeability, to shield the surrounding of the adsorber bed from the magnetic field generated by the magnetic field generator.

Because high magnetic field strengths are necessary for inductive heating of the adsorbing material, magnetic shielding may be necessary in order to protect other electrical or electronical equipment.

Additionally or alternatively to the magnetic shielding, in configurations with more than one adsorber bed modules, in order to reduce electromagnetic interference in sensitive environments, the adsorber bed modules are arranged in a way as to minimize stray magnetic fields. Specifically, this can be achieved by using an even number of adsorber bed modules, placed in parallel next to each other, and electrically connected to produce magnetic flows of equal value but the opposite sign. Furthermore, the stray magnetic fields can be short-circuited by a material with high magnetic permeability and low losses.

According to another embodiment, the magnetic field generator comprises an inductor coil that extends along an outer surface of a housing that defines the cavity.

When the inductor coil is supplied with high frequency electrical current, it generates an alternating magnetic field that is present within the cavity and that penetrates the adsorbing material. Therefore, induction heating of the adsorbing material having magnetic properties is facilitated. The inductor coil may be wound onto the housing in any suitable winding direction. In particular, the inductor coil may be wound such that a longitudinal axis of the inductor coil extends along a longitudinal axis defined between the inlet valve and the outlet valve. However, this is only one non limiting example. Other winding directions are conceivable, too.

According to another embodiment, the inlet valve and the outlet valve are made from a material with high magnetic permeability, thereby improving magnetic shielding of the adsorber bed with regard to the environment.

This may in particular be useful when a magnetic shielding is used to close the surrounding shielding if the valves are in the closed position. With the additional shielding functionality of the valves, the magnetic emissions can be eliminated and the homogeneity of the electromagnetic field inside the adsorber bed module (i.e., inside the cavity in particular) for homogenous heating of the adsorbing material can be increased. This is especially beneficial for submarine and space/aviation applications.

According to a second aspect, a vehicle having a life support system is provided. The life support system comprises an air cleaning device as described above. The air cleaning device is configured to remove CO₂ from the surrounding air within the vehicle.

According to an embodiment, the vehicle is a submarine vehicle,a spacecraft, a hyperloop train or another closed habitat application.

In summary, the present disclosure provides an energy efficient and lightweight air cleaning device, which may, for example, be used for the CO₂ separation from the cabin air in closed habitats, like in space stations, submarines or hyperloop trains, or for the CO₂ separation from environmental air in Direct Air Capture (DAC) systems or in combination with air conditioning systems in buildings or aircrafts. Further, the system allows for the generation of a CO₂ gas with very high purity, which can be further processed in additional systems downstream, for example P-t-X (Power-to -Gas, Power-to-Liquids) plants for the production of synthetic fuels. Especially in the latter case, the disclosed system may capture the CO₂ from the atmosphere, thereby allowing for energy efficient production of CO₂ neutral synthetic fuels.

Although the present disclosure is described with regard to aviation and submarine applications, it should be noted, that the disclosure may be used for any suitable application, such as for automotive applications, train application, and similar applications where CO₂ removal from air is desired.

### BRIEF DESCRIPTION OF THE DRAWINGS

In the following, exemplary embodiments are described in more detail having regard to the attached figures. The illustrations are schematic and not to scale. Identical reference signs refer to identical or similar elements. The figures show:
- **Fig. 1**: a schematic representation of an air cleaning device.
- **Fig. 2**: a schematic representation of three variants of functionalized adsorbing materials.
- **Fig. 3**: a schematic representation of a honeycomb-like support structure for the absorbing material used in the air cleaning device of Fig. 1.
- **Fig. 4**: a schematic representation of an arrangement of two adsorber bed modules, such that magnetic interference is reduced.

### DETAILLED DESCRIPTION

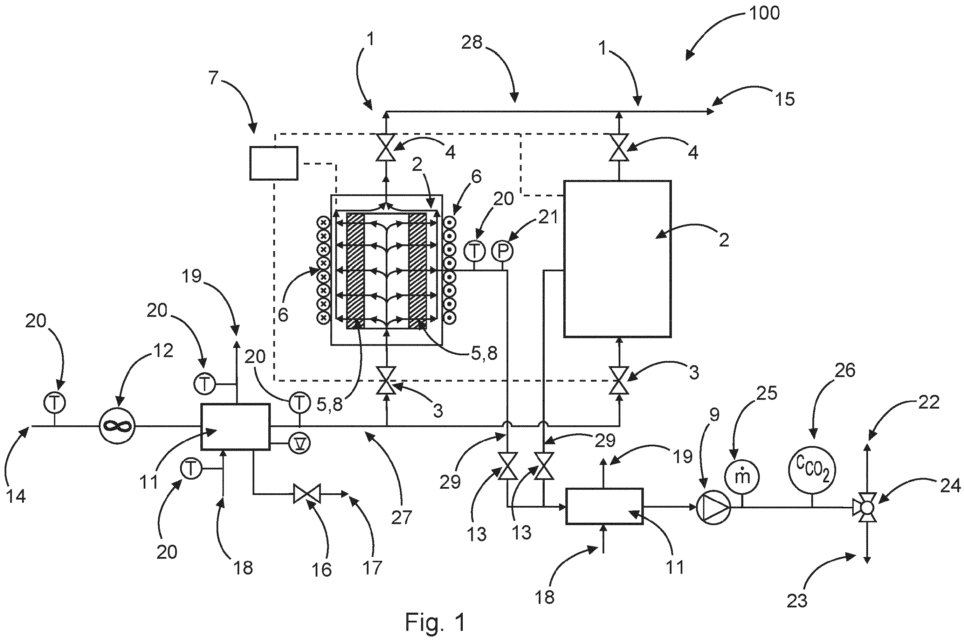

Fig. 1 shows a schematic representation of an air cleaning device 100. The air cleaning device 100 comprises two adsorber bed modules 1, the details of which are only shown for the first adsorber bed module 1. The adsorber bed modules 1 are connected in parallel between a common feed line 27 and a common exhaust line 28. The adsorber bed modules 1 are each connected to the feed line via an inlet valve 3 and to the exhaust line via an outlet valve 4.

The feed line 27 further includes an air fan 12 for supplying environmental air 14 to the adsorber bed modules 1. A first condensing heat exchanger (CHX) 11 is arranged in the feed line 27 between the air fan 12 and the inlet valves 3. The first CHX 11 is used for pre-drying of the environmental air 14 prior to supplying it to the adsorber bed modules 1. The first CHX 11 includes a condensate relief valve 16, a coolant water inlet 18 and a coolant water outlet 19 as well as temperature sensors 20.

The exhaust line 28 provides CO₂ cleaned air 15 from adsorber bed modules 1 to the environment.

Each of the adsorber bed modules 1 (only shown for the first adsorber bed module 1) includes a housing defining a cavity 2, an induction coil 6 (magnetic field generator 6) and an adsorbing material 5. The adsorbing material 5 is arranged within the cavity 2 in the form of a cylindrical shaped bed 8. The adsorbing material 5 is held inside a non-magnetic and electrically non-conductive support structure (not shown). The cavity 2 of each of the adsorber bed modules 1 is further connected to a vacuum line 29, which is connected to a second condensing heat exchanger (CHX) 11 via a vacuum pump valve 13. The second CHX 11, in turn, is connected to a vacuum pump 9 which is connected to a three-way valve 24.

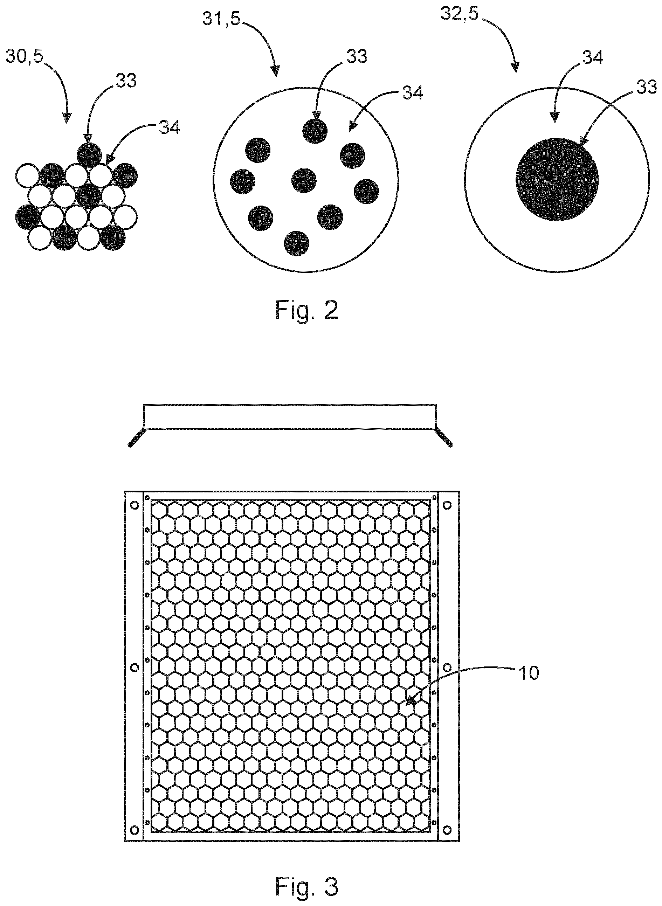

The adsorbing material 5 comprises a functionalized solid amine material comprising a solid amine polymer material and a magnetic inorganic material, providing the adsorbing material 5 with magnetic properties. The solid amine polymer material is configured to adsorb CO₂ from air coming into contact with the solid amine polymer material. The adsorbing material 5 (the functionalized solid amine material) may be configured according to any of the variants described with regard to Fig. 2 further below.

The controller 7 is configured to control the opening state of each one of the valves 3, 4, 13, the activation state of at least one HF generator that supplies the induction coils 6 with electrical energy, and of the vacuum pump 9, such that each of the adsorber bed modules 1 operates in one of an adsorbing phase, an evacuating phase, and a regenerating phase. It should be noted that a single HF generator may supply all of the induction coils 6 with electrical energy or each of the induction coils 6 may have a separate HF generator.

In the adsorbing phase, the inlet valve 3 and the outlet valve 4 of the corresponding adsorber bed module 1 are opened. The air fan 12 blows environmental air 14 via the first CHX 11 into the corresponding adsorber bed module 1 via the corresponding inlet valve 3. The environmental air 14 (containing CO₂) flows into the cavity 2 of the corresponding adsorber bed module 1 and penetrates the adsorbing material in a radial direction. Thereby, the solid amine polymer material adsorbs the CO₂ molecules from the environmental air 14. The CO₂ cleaned air 15 leaves the cavity via the exhaust line 28. While one of the adsorber bed modules 1 is in the adsorbing phase, the other one is in the regenerating phase, as described below, thereby providing a continuous flow of CO₂ product gas 23 (via the vacuum line 29) and a continuous flow of CO₂ cleaned air 15.

Once the adsorbing material 5 of the corresponding adsorber bed module 5 is saturated and therefore can no longer adsorb any CO₂, it has to be regenerated, meaning the adsorbed CO₂ needs to be desorbed and removed from the cavity. However, the already present cleaned air within the cavity 2 first has to be removed from the cavity 2. Therefore, the controller 7 controls the adsorber bed 1 that has been in the adsorbing phase to transition to the evacuating phase.

In the evacuating phase, the controller 7 closes the inlet valve 3 and the outlet valve 4 of the corresponding adsorber bed module 1 and activates the vacuum pump 9. The three-way valve 24 is set to a position, where the air recovery gas 22 (the at least partially CO₂ cleaned air recovered from the corresponding cavity 2) is directed to the environment. Once the cavity 2 is evacuated (for example determined by means of the pressure sensor 21), the controller 7 transitions the corresponding adsorber bed module 1 from the evacuating phase to the regenerating phase. Simultaneously, the other one of the adsorber bed modules 1 is set to the adsorbing phase, as described above. Evacuating the cavity 2 prior to regenerating is particularly important in applications where the CO₂ product gas 23 is further processed downstream, for example in a P-t-X system to produce synthetic fuel, because for such purposes, CO₂ gas as pure as possible is necessary and the cleaned air within the cavity 2 would dilute the CO₂.

In the regenerating phase, the corresponding inlet and outlet valves 3, 4 remain closed and the inductor coil 6of the corresponding adsorber bed module 1 is activated, generating a high frequency alternating magnetic field within the cavity 2 and therefore within the adsorbing material 5. The vacuum pump 9 remains active. Since the adsorbing material 5 contains a magnetic inorganic material, this material is heated up by the induction field and transfers the heat by contact to the solid amin polymer material. When the solid amin polymer material reaches a certain desorbing temperature (e.g., 105 °C), the solid amin polymer material releases the CO₂ molecules adsorbing during the adsorbing phase. This CO₂ product gas 23 is evacuated by the vacuum pump 9. The three-way valve 24 is accordingly set, for example towards a gas tank or a CO₂ processing facility or system downstream. The end of the regenerating phase can, for example, be detected by a CO₂ flow meter 25.

Once a full cycle consisting of the adsorbing phase, the evacuating phase, and the regenerating phase is finished, the controller loops back and repeats the full cycle. Because the first and the second adsorber bed modules 1 are operated inversely at any time, a constant CO₂ and cleaned air flow can be ensured. Further, temperature sensors 20, pressure sensor 21 and CO₂ flow meter 25 and CO₂ gas concentration sensor 26 can be utilized to set the power of the inductor coil accordingly, in order to achieve a desired CO₂ flow.

Fig. 2 shows three variants 30, 31, 32 of compositions of the adsorbing material 5.

In the first variant 30, the magnetic inorganic material and the solid amine polymer material are both in the form of particles. The magnetic inorganic material particles 33 and the solid amine polymer material particles 34 are approximately equal in size and mixed together loosely. However, the material may also undergo a compressing procedure, in order to improve adhesion. Further, the surface of the magnetic inorganic material particles 33 may be functionalized with chemical functional groups to improve wetting by and adhesion to the solid amine polymer material particles 34. Further, the solid amine polymer material particles 34 and/or the magnetic inorganic material particles 33 may be coated with a solid adhesive material, thereby improving stability against de-mixing and thermal contact.

In the second variant 31, the magnetic inorganic material particles 33 are considerably smaller than the solid amine polymer material particles 34. Multiple magnetic inorganic material particles are incorporated into each solid amine polymer material particle 34.

In the third variant 32, the magnetic inorganic material particles 33 build a core that is coated with the solid amine polymer material 34.

The adsorbing material 5 may be configured according to any one of these variants 30, 31, 32.

Fig. 3 schematically shows a honeycomb-like support structure for the adsorbing material 5 in a plane and cut view. The support structure is a flat support structure having a honeycomb structure 10. The individual cells of the honeycomb structure 10 may be filled with the adsorbing material 5, thereby building a superordinate macro structure. Therefore, only the particles (magnetic inorganic material particles and solid amine polymer material particles) within each cell can segregate or de-mix from each other. However, the superordinate macro structure still ensures even heating up. Multiple of the support structures shown in Fig. 3 can be added together, to build a polygon like closed ring, as described further above.

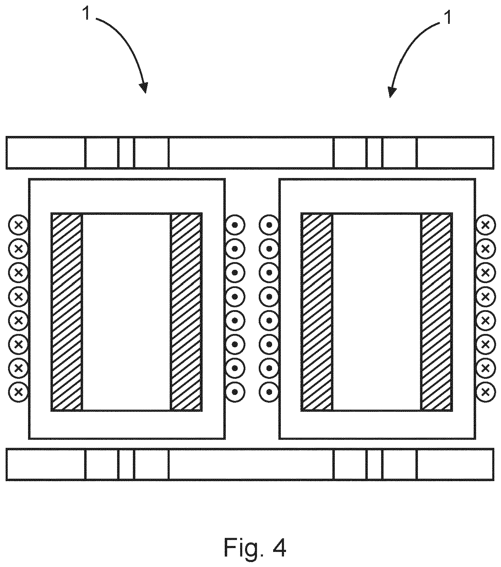

Fig. 4 shows an arrangement of two adsorber bed modules 1. The modules 1 are arranged such that the magnetic fields between the adsorber bed modules largely cancel each other. An additional magnetic shielding, for example by means of a material having high magnetic permeability surrounding the arrangement may be necessary to avoid interference of the strong magnetic fields with the surroundings.

It should be noted that "comprising" or "including" does not exclude other elements or steps, and "one" or "a" does not exclude a plurality. It should further be noted that features or steps that have been described with reference to any of the above embodiments may also be used in combination with other features or steps of other embodiments described above. Reference signs in the claims are not to be regarded as limitation.

### LIST OF REFERENCE SIGNS

- 1: adsorber bed module
- 2: cavity
- 3: inlet valve
- 4: outlet valve
- 5: adsorbing material
- 6: magnetic field generator, inductor coil
- 7: controller
- 8: cylindrical or polygon shaped bed
- 9: vacuum pump
- 10: honeycomb structure
- 11: condensing heat exchanger (CHX)
- 12: air fan
- 13: vacuum pump valves
- 14: environmental air
- 15: CO₂ cleaned air
- 16: condensate relief valve
- 17: condensate
- 18: coolant water inlet
- 19: coolant water outlet
- 20: temperature sensors
- 21: pressure sensor
- 22: air recovery gas
- 23: CO₂ product gas
- 24: three-way valve
- 25: CO₂ flow meter
- 26: CO₂ gas concentration sensor
- 27: feed line
- 28: exhaust line
- 29: vacuum line
- 30: adsorbing material variant 1
- 31: adsorbing material variant 2
- 32: adsorbing material variant 3
- 100: air cleaning device

## Claims

1. Air cleaning device (100) for removing CO₂ from a gas containing CO₂, the air cleaning device (100) comprising:
an adsorber bed module (1) having:
a cavity (2);
an inlet valve (3) and an outlet valve (4);
an adsorbing material (5) within the cavity (2); and
a magnetic field generator (6) configured to generate an alternating magnetic field that acts on the cavity (2);
a controller (7); and
a vacuum pump (9);
wherein the adsorbing material (5) has magnetic properties;
wherein the controller (7) is configured to control an opening state of the inlet valve (3) and an opening state of the outlet valve (4) as well as an activation state of the magnetic field generator (6) and of the vacuum pump (9), such that the air cleaning device (100) is selectively operated in one of an adsorbing phase, an evacuating phase, and a regenerating phase;
wherein, in the adsorbing phase, the inlet valve (3) is in an open state and the outlet valve (4) is in an open state and the magnetic field generator (6) is deactivated, such that the gas passing from the inlet valve (3) through the cavity (2) and out of the outlet valve (4) penetrates the adsorbing material (5), the adsorbing material (5) thereby adsorbing CO₂ from the gas;
wherein, in the evacuating phase, the inlet valve (3) is in a closed state and the outlet valve (4) is in a closed state and the controller (7) is configured to command the vacuum pump (9) to evacuate the cavity (2); and
wherein, in the regenerating phase, the inlet valve (3) is in a closed state and the outlet valve (4) are in a closed state and the controller (7) is configured to activate the magnetic field generator (6), thereby heating the adsorbing material (5) by induction heating and desorbing the CO₂ from the adsorbing material (5).

2. Air cleaning device (100) of claim 1, wherein the adsorbing material (5) is a functionalized solid amine material.

3. Air cleaning device (100) of claim 2, wherein the functionalized solid amine material comprises a solid amine polymer material and a magnetic inorganic material, wherein the solid amine polymer material and the magnetic inorganic material are one of:
each in particle form, wherein the solid amine polymer material particles and the magnetic inorganic material particles are loosely mixed together;
each in particle form, wherein the magnetic inorganic material particles are incorporated as smaller particles within the solid amine polymer material particles; or
the magnetic inorganic material builds a particle core that is coated with the solid amine polymer material.

4. Air cleaning device (100) of claim 3, wherein the magnetic inorganic material comprises at least one of:
a metallic alloy based on at least one metal from the group consisting of iron or nickel or cobalt or a combination thereof;
a compound based on chromium dioxide;
a compound based on iron oxides.

5. Air cleaning device (100) of claim 3 or 4, wherein a surface of the magnetic inorganic material particles is functionalized with chemical functional groups to improve wetting by and adhesion to the solid amine polymer material.

6. Air cleaning device (100) of claim 5, wherein the surface chemical functional groups comprise at least one of carboxyl, epoxide, isocyanate, mercaptan, and isothiocyanate.

7. Air cleaning device (100) of any one of claims 3 to 6, wherein the solid amine polymer material and/or the magnetic inorganic material is coated with a solid adhesive material, thereby improving stability against de-mixing and thermal contact.

8. Air cleaning device (100) of any one of the preceding claims, wherein the adsorbing material (5) is arranged in a cylindrical or polygon shaped bed (8) within the cavity (2), such that the gas entering the cavity (2) penetrates the cylindrical or polygon shaped bed (8), containing the adsorbing material (5), in a radial direction.

9. Air cleaning device (100) of claim 8, wherein the cylindrical or polygon shaped bed (8) comprises an integrated honeycomb structure (10).

10. Air cleaning device (100) of any one of the preceding claims, wherein the magnetic properties of the adsorbing material (5) comprise a Curie temperature that is higher than the necessary temperature for desorbing adsorbed CO₂ from the adsorbing material (5) and lower than a temperature that has negative effects on the adsorbing material (5), such that the adsorbing material (5) loses its magnetic properties when the Curie temperature is reached, thereby providing self-regulated induction heating preventing overheating of the adsorbing material (5).

11. Air cleaning device (100) of any one of the preceding claims, wherein the adsorber bed module (1) is enclosed by a magnetic shielding having a high magnetic permeability, to shield the surrounding of the adsorber bed module (1) from the magnetic field generated by the magnetic field generator (6).

12. Air cleaning device (100) of any one of the preceding claims, wherein the magnetic field generator (6) comprises an inductor coil (6) that extends along an outer surface of a housing that defines the cavity (2).

13. Air cleaning device (100) of any one of the preceding claims, wherein the inlet valve (3) and the outlet valve (4) are made from a material with high magnetic permeability, thereby improving magnetic shielding of the adsorber bed module (1) with regard to the environment.

14. Vehicle (200) having a life support system, wherein the life support system comprises an air cleaning device (100) of any one of the preceding claims;
wherein the air cleaning device (100) is configured to remove CO₂ from the surrounding air within the vehicle.

15. Vehicle (200) of claim 14, wherein the vehicle (200) is a submarine vehicle, a spacecraft, a hyperloop train or another closed habitat application.
